# EUROPÄISCHE PATENTSCHRIFT

(11) **EP 0 733 768 B1**
(45) Veröffentlichungstag und Bekanntmachung des Hinweises auf die Patenterteilung: **28.05.2003**
(21) Anmeldenummer: 96890023.3
(22) Anmeldetag: 21.02.1996
(51) Int. Cl.: E06B 3/677

(54) **Verfahren und Vorrichtung zum Dosieren von Gas**
Method and apparatus for dosing gas
Procédé et dispositif de dosage de gaz

(30) Priorität: 21.03.1995 AT 50095
(43) Veröffentlichungstag der Anmeldung: 25.09.1996
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 615 044
- WO-A-89/03925
- DE-A- 3 941 430

## Beschreibung

Die Erfindung betrifft ein Verfahren zum Dosieren von Schwergas für das Füllen von Isolierglasscheiben in einer für einen einmaligen Füllvorgang benötigten Menge, oder eines Teiles dieser Menge.

Isolierglasscheiben werden in zunehmendem Ausmaß mit Schwergas (Schwefelhexafluorid oder ein Edelgas, wie beispielsweise Argon oder auch Xenon) gefüllt, um ihre Isoliereigenschaften zu verbessern.

Für das Füllen von Isolierglasscheiben mit Schwergas sind verschiedene Verfahren und Vorrichtungen (EP 0 276 647 A, EP 0 324 333 C) bekannt geworden, wobei auch vorgeschlagen worden ist, Isolierglasscheiben nicht erst nach ihrem Zusammenbau mit Schwergas zu füllen, sondern gleich mit Schwergas gefüllt zusammenzubauen (DE 31 39 856 A oder DE 31 01 342 C).

Problematisch bei allen bekannten Verfahren zum Herstellen von Isolierglasscheiben, die einen mit Schwergas gefüllten Innenraum besitzen, ist es, die benötigte Menge an Schwergas richtig zu dosieren. Es wird daher häufig auch so gearbeitet, daß Schwergas solange in die Isolierglasscheibe oder in die Zusammenbaustation eingeblasen wird, bis das aus dem Innenraum der Isolierglasscheibe oder das aus der Zusammenbaustation abströmende Gas den gewünschten Anteil an Schwergas enthält. Auch beim Zusammenbauen von mit Schwergas gefüllten Isolierglasscheiben wird solange Schwergas zugeführt, bis der gewünschte Füllgrad erreicht worden ist, was durch Schwergassensoren (Gasschnüffler) überwacht wird.

Bei allen bekannten Verfahren ist es nachteilig, daß sie mit hohen Gasverlusten arbeiten, was insbesondere bei teuren Edelgasen nachteilig ist.

Es ist auch schon vorgeschlagen worden (EP 0 276 647 A) in den Innenraum von Isolierglasscheiben genau die Menge an Schwergas einzuführen, die den gewünschten Füllgrad bezogen auf das Volumen des Innenraums der Isolierglasscheibe entspricht. Irgendwelche Maßnahmen wie dieses Schwergas entsprechend dosiert werden kann, sind aber in der EP 0 276 647 A nicht genannt.

Aus der DE 39 41 430 A ist eine Meß- und Dosiervorrichtung für flüssige und gasförmige Medien bekannt, bei der die Bewegungen eines Kolbens in einer Kolben-Zylinder-Einheit zum Dosieren des Mediums herangezogen werden.

Der Erfindung liegt die Aufgabe zugrunde, ein Verfahren anzugeben, mit dem Schwergas beim Herstellen von mit Schwergas gefüllten Isolierglasscheiben einfach und genau dosiert werden kann, wobei es auch möglich sein soll, die jeweils abgemessene Menge an Schwergas dem Volumen des Innenraumes der mit Schwergas zu füllenden Isolierglasscheibe anzupassen.

Erfindungsgemäß wird diese Aufgabe mit den in Anspruch 1 genannten Merkmalen gelöst.

Bevorzugte und vorteilhafte Ausgestaltungen des erfindungsgemäßen Verfahrens sind Gegenstand der Unteransprüche 2 bis 7.

Eine zum Durchführen des erfindungsgemäßen Verfahrens besonders geeignete Vorrichtung ist durch die Merkmale des Anspruches 8 gekennzeichnet. Bevorzugte und vorteilhafte Ausgestaltungen dieser erfindungsgemäßen Vorrichtung sind Gegenstand der Vorrichtungsunteransprüche 9 bis 19.

Bei dem erfindungsgemäßen Verfahren und mit der erfindungsgemäßen Vorrichtung wird die für jeweils einen Füllvorgang, bzw. einen Zusammenbauvorgang einer Isolierglasscheibe, die einen mit Schwergas gefüllten Innenraum besitzt, benötigte Menge an Schwergas genau dosiert zugeführt. Alternativ kann mit der erfindungsgemäßen Vorrichtung auch eine frei bestimmbare, bekannte Teilmenge der für einen Füllvorgang bzw. einen Zusammenbauvorgang benötigte Menge so oft wie für den gesamten Vorgang erforderlich dosiert werden. Dabei können die Teilmengen auch unterschiedlich groß sein.

Weitere Einzelheiten und Merkmale des erfindungsgemäßen Verfahrens und einer zum Durchführen desselben bevorzugt geeigneten Vorrichtung der Erfindung ergeben sich aus der nachstehenden Beschreibung an Hand der Zeichnungen.

Es zeigt: Fig. 1 schematisiert eine erste Ausführungsform einer Vorrichtung gemäß der Erfindung, Fig. 2 teilweise geschnitten ein praktisches Ausführungsbeispiel eines Zylinders mit in ihm verschiebbaren Kolben gemäß der Erfindung und Fig. 3 ein Schaltschema eines Ausführungsbeispiels der Erfindung.

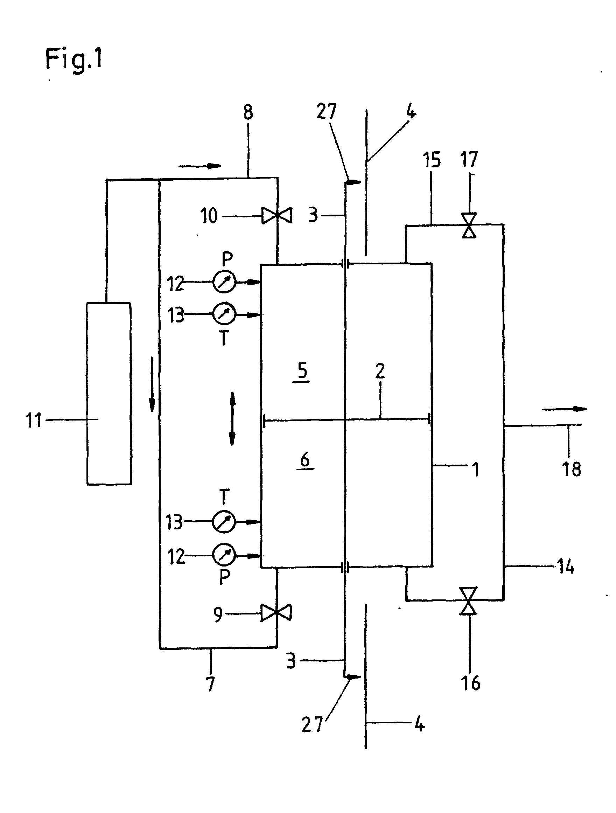

Die in Fig. 1 schematisch gezeigte Vorrichtung besitzt einen Zylinder 1, in dem ein Kolben 2 verschiebbar ist. An diesem Kolben 2 sind zwei in entgegengesetzte Richtungen weisende und gasdicht aus dem Zylinder 1 herausgeführte Stangen 3 befestigt, die dazu dienen, mit Hilfe von Meßeinrichtungen (z.B. elektronischen Meßlinealen 4) die genaue Lage des Kolbens 2, die für das Volumen der Räume 5, 6 charakteristisch ist, zu erfassen. Es versteht sich, daß auch mit nur einer Stange 3 und einem Meßlineal 4 das Auslangen gefunden werden kann.

An den Enden der Stangen 3 (oder der einen Stange 3) sind Weggeber 27 befestigt, die zusammen mit den elektronischen Meßlinealen 4 die genaue Lage des Kolbens 2 im Zylinder 1 und damit die Größe der Räume 5 und 6 erfassen.

In die beiden Räume 5 und 6 im Zylinder 1, die durch den Kolben 2 voneinander getrennt sind, führen Gaszuführleitungen 7, 8, über welche Schwergas, mit dem eine Isolierglasscheibe zu füllen ist, von einer Schwergasquelle 11 zugeführt wird. In den beiden Leitungen 7, 8 sind Absperrorgane 9, 10 vorgesehen. Weiters ist jedem Raum 5, 6 eine Vorrichtung 12 zum Erfassen des Druckes und eine Vorrichtung 13 zum Erfassen der Temperatur des in diesem Raum 5, 6 enthaltenen Schwergases zugeordnet.

Von den beiden Räumen 5, 6 führen Leitungen 14, 15, in denen ebenfalls Absperrorgane 16, 17 vorgesehen sind, zu einer Leitung 18, die zu einer Vorrichtung zum Füllen von Isolierglasscheiben mit Schwergas oder zu einer Zusammenbaustation, in der mit Schwergas gefüllte Isolierglasscheiben zusammengebaut werden können, führt.

Die eben beschriebene Vorrichtung arbeitet wie folgt:

In den Raum 5 wird bei geöffnetem Absperrorgan 10 und geschlossenen Absperrorganen 9, 16 und 17 aus der Gasquelle 11 Schwergas über die Leitung 8 zugeführt. Dabei erhöht sich der Druck im Schwergas in dem Raum 5 im Zylinder 1 und der Kolben 2 verschiebt sich unter Vergrößern des Raumes 5 und unter zunehmendem Verdichten des im anderen Raum 6 des Zylinders 1 enthaltenen Schwergases. Der im Raum 5 herrschende Druck und die Temperatur werden von den Meßgeräten gemessen und die Lage des Kolbens 2 durch das der Kolbenstange 3 zugeordnete Meßlineal 4 erfaßt.

Sobald die Größe des Raumes 5 und der in diesem herrschende Druck sowie die Temperatur der vorgegebenen und für einen Füllvorgang benötigten Menge (oder eines bekannten Teils dieser Menge) an Schwergas entspricht, wird das Absperrorgan 10 geschlossen und das Absperrorgan 17 geöffnet. Unter Verschieben des Kolbens 2 wird nun das Schwergas aus dem Raum 5 heraus und über die Leitung 15 zur Leitung 18 zur Füllstation oder Zusammenbaustation geführt, wo eine Isolierglasscheibe mit Schwergas gefüllt oder eine mit Schwergas gefüllte Isolierglasscheibe zusammengebaut wird.

Das Verschieben des Kolbens 2 zum Herausdrücken von Schwergas aus dem Raum 5 kann dadurch erfolgen, daß in den anderen Raum 6 bei jetzt geöffnetem Absperrorgan 9 Schwergas eingeleitet wird.

Es kann auch so gearbeitet werden, daß der Kolben 2 jeweils bis zu einer seiner beiden Endlagen am Stirnende des Zylinders 1 verschoben wird, bevor in den Raum 5 oder 6, der praktisch den ganzen Innenraum des Zylinders einnimmt, Schwergas eingefüllt wird.

Statt der beschriebenen Vorrichtung mit dem verschiebbaren Kolben 2, der den Innenraum des Zylinders 1 in zwei für das Dosieren von Schwergas zur Verfügung stehende Räume 5, 6 unterteilt, kann auch eine vereinfachte Ausführungsform mit nur einem Raum von zur Dosierung bereitgestelltem, abgemessenem Schwergas vorgesehen sein, bei der dem verschiebbaren Kolben 2 eine Antriebsvorrichtung zugeordnet ist, um diesen nach been-detem Füllen des (einzigen) Raumes mit der jeweils gewünschten Menge an Schwergas zum Herausdrücken des Schwergases aus dem Raum zu verschieben.

Eine Ausführungsform mit einem verschiebbaren Kolben 2 und zwei für das Dosieren von Schwergas verfügbaren Räumen 5, 6 im Zylinder 1 hat aber den Vorteil, daß praktisch kontinuierlich gearbeitet werden kann, da immer einer der beiden Räume 5, 6 und mit einer genau abgemessenen Menge an Schwergas gefüllt ist und für einen Füllvorgang bzw. einen Zusammenbauvorgang einer Isolierglasscheibe zur Verfügung steht.

Es ist ersichtlich, daß mit der erfindungsgemäßen Arbeitsweise Schwergasmengen aufgrund der erfaßten Werte für Temperatur und Druck und das Volumen des Raumes genau dosiert werden können, zumal die Menge ausschließlich von Temperatur/Druck und vom Verschiebeweg (Lage) des Kolbens abhängt, da alle anderen das Volumen an Schwergas bestimmenden Faktoren konstante Größen (physikalische Konstanten des Schwergases und der Vorrichtung sind.

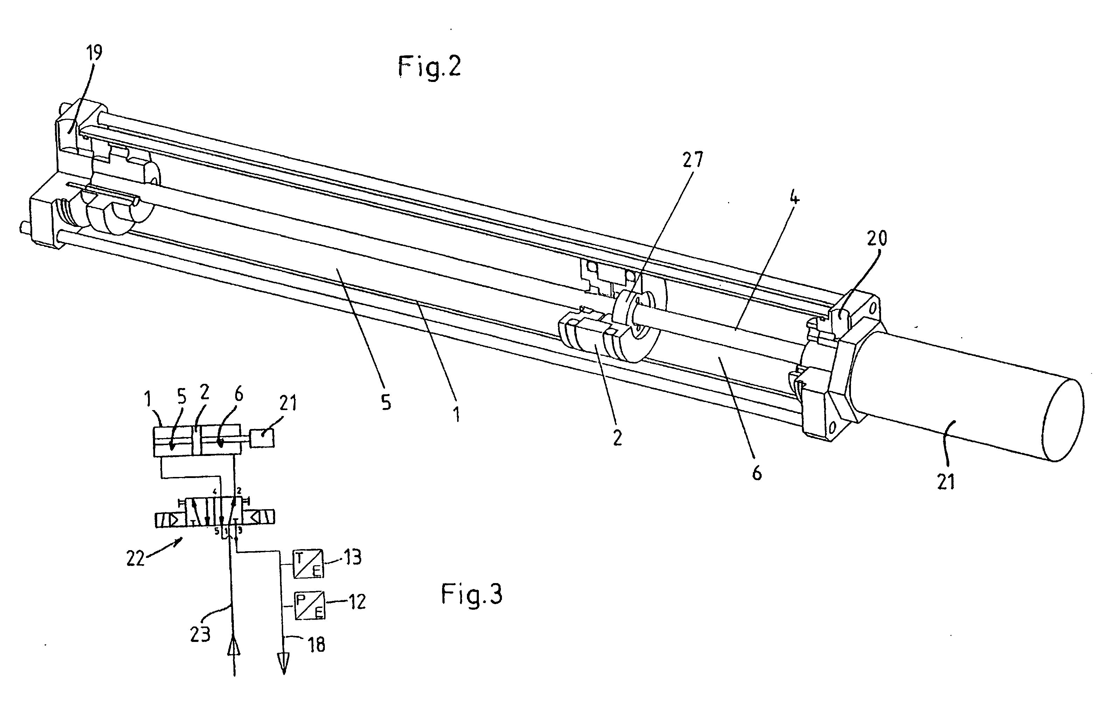

Bei der in Fig. 2 gezeigten praktischen Ausführungsform (teilweise geschnitten) ist ein Kolben 2 vorgesehen, der den Innenraum eines Zylinders 1 in zwei Räume 5 und 6 unterteilt. Bei der in Fig. 2 gezeigten Ausführungsform ist das Meßlineal 4 im Inneren des Zylinders 1 aufgenommen und der Wegeber 27 ist am Kolben 2 vorgesehen. Außerhalb des Zylinders 1 ist das Auswertegerät 21 für die Lagebestimmung des Kolbens 2 innerhalb des Zylinders 1 angebaut. Die beiden Räume 5 und 6 werden über Anschlüsse 19 bzw. 20 an die Schwergaszuführleitungen, die im gezeigten Ausführungsbeispiel (sh. auch Fig. 3) auch gleichzeitig die Schwergasabführleitungen sein können (die Leitungen 7 und 14, sowie die Leitungen 8 und 15 sind dann jeweils zu einer einzigen Leitung zusammengefaßt) angeschlossen.

Die in Fig. 2 gezeigte Ausführungsform der Vorrichtung kann, wie im Schaltschema von Fig. 3 gezeigt ist, mit Schwergas gefüllt bzw. Schwergas aus ihr einer Gasfüllstation oder einer Zusammenbaustation zugeführt werden.

Bei der in Fig. 3 gezeigten Ausführungsform sind die Absperrorgane 9, 10, 16, 17 zu einem Mehrwegeabsperrorgan 22 zusammengefaßt. In der in Fig. 3 gezeigten Stellung des Absperrorgans 22 wird das über die Leitung 23 von einer Schwergasquelle 11 zugeführte Schwergas über die Anschlüsse 1, 2 des Mehrwegeabsperrorgans 22 in den Raum 6 des Zylinders 1 eingeleitet, wobei sich der Kolben 2 zunehmend unter Verkleinerung des Raumes 5 verschiebt. Daher wird Schwergas aus dem Raum 5 über die Anschlüsse 4 und 5 des Mehrwegeabsperrorgans 22 der Leitung 18 zugeführt, wobei in der gezeigten Ausführungsform der Temperaturfühler 13 und der Drucksensor 12 der Leitung 18 zugeordnet sind. Sobald auf Grund des Verschiebeweges des Kolbens 2 unter der Wirkung des in den Raum 6 eingeführten Schwergases und unter Berücksichtigung der vom Temperaturfühler 13 gemessenen Temperatur und des vom Drucksensor 12 erfaßten Druckes festgestellt worden ist, daß die benötigte Menge an Schwergas (oder eine definierte Teilmenge) durch die Leitung 18 zu der nachgeschalteten Vorrichtung geströmt ist, wird das Zuführen von Schwergas in den Raum 6 unterbrochen, das Mehrwegeabsperrorgan 22 verstellt, so daß in einem nachfolgenden Arbeitsschritt durch Zuführen von Schwergas in den Raum 5 und Verschieben des Kolbens 2 im Zylinder 1 unter Verkleinerung des Raumes 6 aus diesem Schwergas wieder in der genau dosierten Menge entnommen und einer nachgeschalteten Vorrichtung zugeführt werden kann.

Die vorstehend für die in den Fig. 2 und 3 gezeigte Ausführungsform beschriebene Arbeitsweise der Vorrichtung kann auch bei der in Fig. 1 gezeigten Ausführungsform angewendet werden und umgekehrt.

Zusammenfassend kann die Erfindung beispielsweise wie folgt dargestellt werden:

Zum Dosieren von Schwergas, das zur Verwendung beim Füllen von Isolierglasscheiben mit Schwergas bzw. beim Zusammenbauen von mit Schwergas gefüllten Isolierglasscheiben bestimmt ist, wird in einen Raum 5 eines Zylinders 1, dessen Innenraum durch einen Kolben 2 in zwei Räume 5 und 6 unterteilt ist, Schwergas eingeleitet, wobei sich der Kolben 2 unter Verkleinerung des anderen Raumes 6 verschiebt, so daß aus diesem Schwergas abströmt. Der Verschiebeweg des Kolbens 2 wird durch einen Weggeber 7 und ein elektronisches Meßlineal 4 erfaßt. Weiters wird die Temperatur und der Druck des aus dem Raum 6 über den Anschluß 20 abströmenden Schwergases erfaßt und das Verschieben des Kolbens 2 abgebrochen, sobald die auf Grund des Verschiebeweges und der Werte von Temperatur und Druck des abströmenden Schwergases ermittelte Menge (Volumen) an Schwergas genau der benötigten Menge an Schwergas entspricht.

## Patentansprüche

1. Verfahren zum Dosieren von Schwergas für das Füllen von Isolierglasscheiben in einer für einen einmaligen Füllvorgang benötigten Menge, oder eines Teiles dieser Menge, **dadurch gekennzeichnet, daß** man das Schwergas in einen Raum einführt, der vergrößer- und verkleinerbar ist, bis die Größe dieses Raumes und die Temperatur sowie der Druck des Schwergases Werte erreicht haben, die der vorgegebenen Menge an Schwergas entspricht und daß man das Schwergas einer Vorrichtung zum Füllen von Isolierglascheiben oder einer Vorrichtung zum Zusammenbau von mit Schwergas gefüllten Isolierglasscheiben zuführt.

2. Verfahren nach Anspruch 1, **dadurch gekennzeichnet, daß** man das in dem Raum enthaltene Schwergas in definierter Menge durch Verkleinern des Raumes einer Vorrichtung zum Füllen von Isolierglasscheiben mit Schwergas oder einer Vorrichtung zum Zusammenbau von mit Schwergas gefüllten Isolierglasscheiben zuführt.

3. Verfahren nach Anspruch 1 oder 2, **dadurch gekennzeichnet, daß** man den Raum durch Verschieben eines in dem Raum verschiebbaren Kolbens unter der Wirkung des Druckes des eingefüllten zu dosierenden Schwergases vergrößert und verkleinert.

4. Verfahren nach einem der Ansprüche 1 bis 3, **dadurch gekennzeichnet, daß** man Schwergas abwechselnd in einen von zwei voneinander durch einen verschiebbaren Kolben getrennten Räumen eines Zylinders einleitet und dann herausdrückt.

5. Verfahren nach Anspruch 4, **dadurch gekennzeichnet, daß** man Schwergas aus einem der beiden Räume herausdrückt, indem man in den anderen der beiden Räume Schwergas einführt.

6. Verfahren nach einem der Ansprüche 3 bis 5, **dadurch gekennzeichnet, daß** man die Menge (das Volumen) des aus dem Raum herausgedrückten Schwergases durch Ermitteln des Verschiebeweges des in ihm verschiebbaren Kolbens erfaßt.

7. Verfahren nach einem der Ansprüche 1 bis 6, **dadurch gekennzeichnet, daß** man den Kolben so lange verschiebt, bis die auf Grund des Verschiebeweges des Kolbens und des Druckes sowie der Temperatur des Schwergases ermittelte Menge an Schwergas der vorgegebenen Menge an Schwergas entspricht.

8. Vorrichtung zum Durchführen des Verfahrens nach einem der Ansprüche 1 bis 7, mit einem Zylinder (1), in dem verschiebbar ein Kolben (2) aufgenommen ist, wobei an den vom Kolben (2) begrenzten Raum (5, 6) des Zylinders (1) eine Leitung (7, 8) zum Zuführen von Schwergas und eine Leitung (14, 15) zum Abziehen von Schwergas angeschlossen sind, **dadurch gekennzeichnet, daß** eine Vorrichtung (12) zum Messen des Druckes und eine Vorrichtung (13) zum Messen der Temperatur des Gases und eine Einrichtung (4, 27) zum Bestimmen der dem Volumen des Raums (5, 6) entsprechenden Lage des verschiebbaren Kolbens (2) vorgesehen sind.

9. Vorrichtung nach Anspruch 8, dadurch gekennzeichet, daß eine Einrichtung zum Verschieben des Kolbens (2) zum Herausdrücken von Schwergas aus dem Raum (5, 6) vorgesehen ist.

10. Vorrichtung nach Anspruch 8 oder 9, **dadurch gekennzeichnet, daß** in dem Zylinder (1) zwei voneinander durch den Kolben (2) getrennnte Räume (5, 6) vorgesehen sind, und daß an beide Räume (5, 6) Leitungen (7, 8) zum Zuführen von Schwergas und Leitungen (14, 15) zum Abziehen von Schwergas angeschlossen sind.

11. Vorrichtung nach einem der Ansprüche 8 bis 10, **dadurch gekennzeichnet, daß** an die Leitungen (14, 15) zum Abziehen von Schwergas eine Leitung (18) zum Zuführen von Schwergas zu einer Vorrichtung zum Füllen von Isolierglassscheiben mit Schwergas oder zu einer Vorrichtung zum Zusammenbau von mit Schwergas gefüllten Isolierglasscheiben angeschlossen ist.

12. Vorrichtung nach einem der Ansprüche 8 bis 11, dadurch gekennzeichet, daß die Leitungen (7, 8) zum Zuführen von Schwergas an eine Schwergasquelle (11) angeschlossen sind.

13. Vorrichtung nach einem der Ansprüche 10 bis 12, **dadurch gekennzeichnet, daß** jedem der beiden Räume (5, 6) Vorrichtungen (12, 13) zum Messen des Drucks und der Temperatur des Schwergases zugeordnet sind.

14. Vorrichtung nach einem der Ansprüche 10 bis 13, **dadurch gekennzeichnet, daß** die beiden Räume (5, 6) an unterschiedliche Schwergasquellen (11) angeschlossen sind und daß von den beiden Räumen (5, 6) getrennte Leitungen (14, 15) zu wenigstens einer nachgeschalteten Vorrichtung führen.

15. Vorrichtung nach einem der Ansprüche 10 bis 13, **dadurch gekennzeichnet, daß** an jeden der beiden Räume (5, 6) eine Leitung angeschlossen ist, die mit Hilfe eines Mehrwegeventils (22) an eine Schwergasquelle oder an eine Leitung (18) zum Abziehen von im Raum (5, 6) enthaltenem Schwergas angeschlossen ist.

16. Vorrichtung nach Anspruch 15, **dadurch gekennzeichnet, daß** die Vorrichtung (13) zum Erfassen der Temperatur des Schwergases und die Vorrichtung (12) zum Erfassen des Druckes des Schwergases in der zu einer nachgeschalteten Vorrichtungen führenden Leitung (18), in Strömungsrichtung gesehen nach dem Mehrwegeventil (22), vorgesehen sind.

17. Vorrichtung nach einem der Ansprüche 8 bis 16, **dadurch gekennzeichnet, daß** an den Kolben (2) wenigstens eine aus dem Zylinder (1) herausgeführte Kolbenstange (3) angeschlossen ist, die an ihrem außerhalb des Zylinders (1) liegenden Ende eine Weggeber (27) trägt, dem ein Meßlineal (4) zugeordnet ist.

18. Vorrichtung nach einem der Ansprüche 8 bis 16, **dadurch gekennzeichnet, daß** der Kolben (2) im Zylinder (1) mit einem Weggeber (27) ausgestattet ist, und daß im Zylinder (1) ein den Kolben (2) durchgreifendes Meßlineal (4) vorgesehen ist.

19. Vorrichtung nach Anspruch 18, **dadurch gekennzeichnet, daß** das Meßlineal (4) bezüglich des Zylinders (1) koaxial ausgerichtet ist.

## Claims

1. Method for dosing heavy gas for filling double glazing panes in a quantity which is required for a single filling process, or a part of this quantity, **characterised in that** the heavy gas is introduced into a chamber which can be made larger and smaller, until the size of this chamber and the temperature and also the pressure of the heavy gas have achieved values which correspond to the prescribed quantity of heavy gas and **in that** the heavy gas is supplied to a device for filling the double glazing panes or to a device for assembling double glazing panes which are filled with heavy gas.

2. Method according to claim 1, **characterised in that** the heavy gas which is contained in the chamber is supplied in a defined quantity by means of making the chamber smaller to a device for filling double glazing panes with heavy gas or to a device for assembling double glazing panes which are filled with heavy gas.

3. Method according to claim 1 or 2, **characterised in that** the chamber is made larger and smaller by displacing a piston which can be displaced in the chamber under the effect of the pressure of the filled heavy gas to be dosed.

4. Method according to one of the claims 1 to 3, **characterised in that** heavy gas is alternately introduced and then forced out in one of two chambers of a cylinder, which chambers are separated from each other by a displaceable piston.

5. Method according to claim 4, **characterised in that** heavy gas is forced out from one of the two chambers, by introducing heavy gas into the other of the two chambers.

6. Method according to one of the claims 3 to 5, **characterised in that** the quantity (the volume) of the heavy gas which is forced out of the chamber is detected by means of determining the displacement path of the piston which is displaceable therein.

7. Method according to one of the claims 1 to 6, **characterised in that** the piston is displaced until the quantity of heavy gas, which is determined on the basis of the displacement path of the piston and of the pressure and also of the temperature of the heavy gas, corresponds to the prescribed quantity of heavy gas.

8. Device for implementing the method according to one of the claims 1 to 7, having a cylinder (1), in which a piston (2) is displaceably received, a line (7, 8) for supplying heavy gas and a line (14, 15) for withdrawing heavy gas being connected to the chamber (5, 6) of the cylinder (1) which is delimited by the piston (2), **characterised in that** there are provided a device (12) for measuring the pressure and a device (13) for measuring the temperature of the gas and a device (4, 27) for determining the position of the displaceable piston (2), which position corresponds to the volume of the chamber (5, 6).

9. Device according to claim 8, **characterised in that** a device is provided for displacing the piston (2) in order to force out the heavy gas from the chamber (5, 6).

10. Device according to claim 8 or 9, **characterised in that**, in the cylinder (1), two chambers (5, 6) are provided which are separated from each other by the piston (2), and **in that** lines (7, 8) for supplying heavy gas and lines (14, 15) for withdrawing heavy gas are connected to both chambers (5, 6).

11. Device according to one of the claims 8 to 10, **characterised in that** a line (18) for supplying heavy gas to a device for filling double glazing panes with heavy gas or to a device for assembling double glazing panes which are filled with heavy gas is connected to the lines (14, 15) for withdrawing the heavy gas.

12. Device according to one of the claims 8 to 11, **characterised in that** the lines (7, 8) for supplying heavy gas are connected to a source (11) of heavy gas.

13. Device according to one of the claims 10 to 12, **characterised in that** devices (12, 13) for measuring the pressure and the temperature of the heavy gas are assigned to each of the two chambers (5, 6).

14. Device according to one of the claims 10 to 13, **characterised in that** the two chambers (5, 6) are connected to different sources (11) of heavy gas and **in that** separate lines (14, 15) lead from the two chambers (5, 6) to at least one subsequently connected device.

15. Device according to one of the claims 10 to 13, **characterised in that** a line is connected to each of the two chambers (5, 6) which is connected by means of a multiple-way valve (22) to a source of heavy gas or to a line (18) for withdrawing heavy gas which is contained in the chamber (5, 6).

16. Device according to claim 15, **characterised in that** the device (13) for detecting the temperature of the heavy gas and the device (12) for detecting the pressure of the heavy gas are provided in the line (18) which leads to a subsequently connected device, observed in the flow direction after the multiple-way valve (22).

17. Device according to one of the claims 8 to 16, **characterised in that** at least one piston rod (3) which projects from the cylinder (1) is connected to the piston (2), which piston rod carries, on its end situated outwith the cylinder (1), a position transducer (27) to which a measuring rule (4) is assigned.

18. Device according to one of the claims 8 to 16, **characterised in that** the piston (2) in the cylinder (1) is equipped with a position transducer (27), and **in that** a measuring rule (4) which engages through the piston (2) is provided in the cylinder (1).

19. Device according to claim 18, **characterised in that** the measuring rule (4) is aligned coaxially with respect to the cylinder (1).

## Revendications

1. Procédé de dosage de gaz lourd pour le remplissage de vitrages isolants en quantité nécessaire pour une opération de remplissage singulière ou en fraction de cette quantité, **caractérisé en ce qu'**on introduit le gaz lourd dans une chambre dont la taille peut augmenter ou diminuer, jusqu'à ce que la taille de ladite chambre, la température et la pression du gaz lourd aient atteint des valeurs qui correspondent à la quantité prédéterminée de gaz lourd et **en ce qu'**on amène le gaz lourd à un dispositif pour le remplissage de vitrages isolants ou à un dispositif pour l'assemblage de vitrages isolants remplis avec du gaz lourd.

2. Procédé selon la revendication 1, **caractérisé en ce que** par diminution de la taille de la chambre, on amène en une quantité définie le gaz lourd contenu dans la chambre à un dispositif pour le remplissage de vitrages isolants ou à un dispositif pour l'assemblage de vitrages isolants remplis avec du gaz lourd.

3. Procédé selon la revendication 1 ou 2, **caractérisé en ce qu'**on augmente ou on diminue la taille de la chambre par déplacement d'un piston qui coulisser dans ladite chambre sous l'action de la pression du gaz lourd introduit à des fins de dosage .

4. Procédé selon une des revendications 1 à 3, **caractérisé en ce qu'**on introduit et on refoule alternativement du gaz lourd dans l'une de deux chambres d'un cylindre, séparées par un piston coulissant.

5. Procédé selon la revendication 4, **caractérisé en ce qu'**on refoule le gaz lourd de l'une des deux chambres en introduisant du gaz lourd dans l'autre des deux chambres.

6. Procédé selon une des revendications 3 à 5, **caractérisé en ce qu'**on mesure la quantité (le volume) de gaz lourd refoulé hors de la chambre en déterminant la course du piston coulissant dans la chambre.

7. Procédé selon une des revendications 1 à 6, **caractérisé en ce qu'**on déplace le piston jusqu'à ce que la quantité de gaz lourd déterminée sur la base de la course de déplacement du piston, de la pression et de la température du gaz lourd, corresponde à la quantité de gaz lourd prédéterminée.

8. Dispositif pour la mise en oeuvre du procédé selon une des revendications 1 à 7, comprenant un cylindre (1) dans lequel un piston (2) est monté coulissant, une conduite (7, 8) pour l'introduction de gaz lourd et une conduite (14, 15) pour le prélèvement de gaz lourd étant connectées à la chambre (5, 6) du cylindre (1) délimitée par le piston (2), **caractérisé en ce qu'**il est prévu un dispositif (12) pour mesurer la pression et un dispositif (13) pour mesurer la température du gaz lourd, ainsi qu'un dispositif (4, 27) pour déterminer la position du piston coulissant (2), correspondant au volume de la chambre (5, 6).

9. Dispositif selon la revendication 8, **caractérisé en ce qu'**il est prévu un dispositif pour déplacer le piston (2) aux fins de refouler du gaz lourd hors de la chambre (5, 6).

10. Dispositif selon la revendication 8 ou 9, **caractérisé en ce qu'**il est prévu dans le cylindre (1) deux chambres (5, 6) mutuellement séparées et **en ce que** des conduites (7, 8) pour l'introduction de gaz lourd et des conduites (14, 15) pour le prélèvement de gaz lourd sont connectées aux deux chambres (5, 6).

11. Dispositif selon une des revendications 8 à 10, **caractérisé en ce qu'**aux conduites (14, 15) pour le prélèvement de gaz lourd est connectée à une conduite (18) pour amener du gaz lourd à un dispositif pour le remplissage de vitrages isolants avec du gaz lourd ou à un dispositif pour l'assemblage de vitrages isolants remplis de gaz lourd.

12. Dispositif selon une des revendications 8 à 11, **caractérisé en ce que** les conduites (7, 8) pour l'amenée de gaz lourd sont connectées à source de gaz lourd (11).

13. Dispositif selon une des revendications 10 à 12, **caractérisé en ce qu'**à chacune des deux chambres (5, 6) sont associés des dispositifs pour mesurer la pression et la température du gaz lourd.

14. Dispositif selon une des revendications 10 à 13, **caractérisé en ce que** les deux chambres (5, 6) sont connectées à des sources de gaz lourd (11) différentes et **en ce que** des conduites (14, 15) séparées mènent des deux chambres (5, 6) à au moins un dispositif placé en aval.

15. Dispositif selon une des revendications 10 à 13, **caractérisé en ce qu'**à chacune des deux chambres (5, 6) est connectée une conduite qui est connectée par l'intermédiaire d'une vannes à plusieurs voies (22) à une source de gaz lourd ou à une conduite (18) pour le prélèvement de gaz lourd contenu dans la chambre (5, 6).

16. Dispositif selon la revendication 15, **caractérisé en ce que** le dispositif (13) pour mesurer la température du gaz lourd et le dispositif (12) pour mesurer la pression du gaz lourd sont prévus dans la conduite (18) menant à un dispositif aval, après la vanne à plusieurs voies (22), vu dans la direction d'écoulement.

17. Dispositif selon une des revendications 8 à 16, **caractérisé en ce qu'**au piston (2) est reliée au moins une tige de piston (3) qui sort du cylindre (1) et qui, à son extrémité située à l'extérieur du cylindre (1), porte un capteur de déplacement (27) auquel est associée une règle de mesure (4).

18. Dispositif selon une des revendications 8 à 16, **caractérisé en ce que** le piston (2) dans le cylindre (1) est équipé d'un capteur de déplacement (27) et **en ce qu'**il est prévu à l'intérieur du cylindre (1) une règle de mesure (4) qui traverse le piston (2).

19. Dispositif selon la revendication 8, **caractérisé en ce que** la règle de mesure (4) est coaxiale avec le cylindre (1).
